# EUROPÄISCHE PATENTANMELDUNG

(11) **EP 1 369 299 A1**
(43) Veröffentlichungstag der Anmeldung: **10.12.2003**
(21) Anmeldenummer: 02012339.4
(22) Anmeldetag: 05.06.2002
(51) Int. Cl.: B60P 1/44

(54) **Hubladebühne mit federentlasteter Plattform**

(71) Anmelder: Bär, Gerd, 74078 Heilbronn (DE)
(72) Erfinder: Bär, Gerd, 74078 Heilbronn (DE)
(74) Vertreter: KOHLER SCHMID + PARTNER

(57) **Zusammenfassung**

Bei einer Hubladebühne für ein Fahrzeug umfasst das parallelogrammförmige Hubwerk zwei parallele Tragarme (12, 13), an welchen eine Plattform (18) zwischen einer horizontalen Arbeitsposition und einer Fahrposition verschwenkbar gelagert ist, und eine Federeinrichtung (33), welche die Schwenkbewegung der Plattform (18) von der einen in die andere Position unterstützt. Erfindungsgemäß ist die Federeinrichtung (33) durch einen Torsionsstab (331) gebildet, dessen Torsionsachse mit der Drehachse (185) der Plattform (18) zusammenfällt.

## Beschreibung

### Stand der Technik

Bei Hubladebühnen, die außen an Nutzfahrzeugen montiert werden, benötigen die Plattformen mindestens eine Arbeitsstellung für die Hub- und Senkbewegung und eine Fahr- oder Verstaustellung, bei welcher die Plattform entweder an den Aufbaubereich verschwenkt oder unter den Aufbaubereich geklappt wird. Das Verschwenken der Plattform von der Fahr- in die Arbeitsstellung und umgekehrt kann sowohl motorisch als auch von Hand erfolgen. Bei den Ausführungen, die von Hand verschwenkt werden, ist es zur Reduzierung der körperlichen Anstrengung des Bedienenden üblich und zum Teil gesetzlich notwendig, die erforderlichen Verschwenkkräfte durch Federentlastung zu reduzieren. Hierzu werden Gasdruckfedern, Torsionsschenkelfedern, Zug- und Druckfedern eingesetzt.

### Technisches Problem

Diese Federentlastungen sind bereits bei der Neuproduktion enorm kostenaufwendig. Außerdem benötigen Federentlastungen, mit Ausnahme der Torsionsschenkelfeder, für ihre Wirksamkeit entsprechende Hebel, die bei einer Hubladebühne aufgrund der engen Platzverhältnisse nicht immer leicht unterzubringen sind. Außer dem fehlenden Platzbedarf werden auch kosten- und verschleißaufwendige Umlenkhebel mit entsprechenden Lagern und Befestigungselementen an den jeweiligen Bauteilen benötigt. Diese unterliegen naturgemäß am Einsatzort hinten unter dem Fahrzeug einer Beschädigungsgefahr und einem Verschleiß durch Vibrationen, Wasser, Salz, Sand und Schmutz. Ein nicht unwesentlicher Faktor sind auch die hohen Ersatz- und Reparaturkosten.

Der Erfindung liegt daher die Aufgabe zugrunde, eine Federeinrichtung, welche die Schwenkbewegung der Plattform von der einen in die andere Position unterstützt, derart weiterzubilden, dass sie mit wenigen Bauteilen auskommt, verschleißfrei arbeitet und sich platz- und raumsparend unterbringen lässt, so dass sie weder in Betrieb noch in Fahrstellung des Fahrzeugs stört.

### Lösung

Diese Aufgabe wird durch die in den Patentansprüchen aufgeführten Merkmale gelöst.

Erfindungsgemäß wird vorgeschlagen, einen einzigen, entsprechend dem notwendigen Plattformgewicht dimensionierten Torsionsstab durch den Drehpunkt der Plattform am Hubwerk hindurchzuführen. Zu diesem Zwecke muss der Durchmesser des die Plattform lagernden Lagerbolzens aufgrund seiner festigkeitsmäßigen Anforderungen unwesentlich vergrößert werden. Die Lagerbolzen werden hier naturgemäß auf Biegung beansprucht. Der Torsionsstab liegt daher einerseits nahe an der neutralen Zone, andererseits hingegen wächst das Widerstandsmoment durch eine Vergrößerung des Außendurchmessers in der dritten Potenz.

Die Bolzenbefestigung kann wie seither mit den üblichen angeschweißten oder sonst irgendwie befestigten Bolzenlaschen erfolgen. Für eine optimale Torsionswirkung sind an den beiden Enden des Torsionsstabes entsprechende Hebelarme vorgesehen, die am einfachsten durch Umbiegen des Torsionsstabes hergestellt werden können.

Für eine vereinfachte Montage ist der Torsionsstab vorzugsweise zweiteilig ausgeführt, so dass die beiden Torsionsstäbe von links und rechts durch die Bauteile hindurch gesteckt werden können. Die torsionssteife Verbindung erfolgt durch eine entsprechende Kupplung, welche die beiden Torsionsstäbe drehfest verbindet. Die an den Enden des Torsionsstabes angebrachten Hebelarme übertragen das im Torsionsstab zu speichernde bzw. das gespeicherte Drehmoment auf die Plattform.

### Erreichte Vorteile

Mit der erfindungsgemäß ausgeführten Federentlastung erfolgt eine enorme Reduzierung der Bauteile, da gegenüber bekannten Lösungen sämtliche Umlenkhebel, Halteböcke und Lager entfallen. Weiter kommt die erfindungsgemäße Lösung ohne verschleißanfällige Lager aus. Auch der Torsionsstab selbst ist einfachster Natur. Er besteht vorzugsweise aus einem Vierkantfederstahl, an dessen Enden Hebelarme durch Biegen angeformt sind. Dies alles führt zu einer enormen Kostenreduzierung.

Die Gesamtlösung ist äußerst einfach und robust und entspricht deshalb in idealer Weise den Anforderungen des rauen Betriebes. Im Vergleich zu bekannten Lösungen, insbesondere mit Zug- und Druckfedern, nimmt die erfindungsgemäße Lösung keinen zusätzlichen Platz in Anspruch. Die Gestaltungsfreiheit der Plattform und des Hubwerks ist damit wesentlich größer.

Weiter ermöglicht die erfindungsgemäße Lösung in beiden Schwenkrichtungen der Plattform eine gleichwertige Federentlastung. Damit kann auf die sonst notwendigen Einfaltrollen, Gleitstücke oder eine gegenwirkende separate Torsionsschenkelfeder verzichtet werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

### Zeichnung

Es zeigen:
- Fig. 1: schematisch die erfindungsgemäße Hubladebühne mit einer in waagerechter Arbeitsstellung befindlichen, ausgefalteten Plattform;
- Fig. 2: die Hubladebühne der Fig. 1 mit der zu einem Plattformpaket zusammengefalteten Plattform, die von der waagerechten Arbeitsposition nach oben hochgeschwenkt ist;
- Fig. 3: die Hubladebühne der Fig. 1 mit vollständig eingefaltetem Plattformpaket;
- Fig. 4: die Hubladebühne der Fig. 1 mit dem in seine Fahrstellung angehobenen Plattformpaket;
- Fig. 5: eine die Schwenkbewegungen der entsprechend Fig. 4 zusammengefalteten Plattform unterstützende Federeinrichtung, gesehen in Fahrtrichtung schräg von rechts; und
- Fig. 6: eine vergrößerte Detailansicht der Federeinrichtung gemäß Vl in Fig. 5.

### Beschreibung des Ausführungsbeispiels

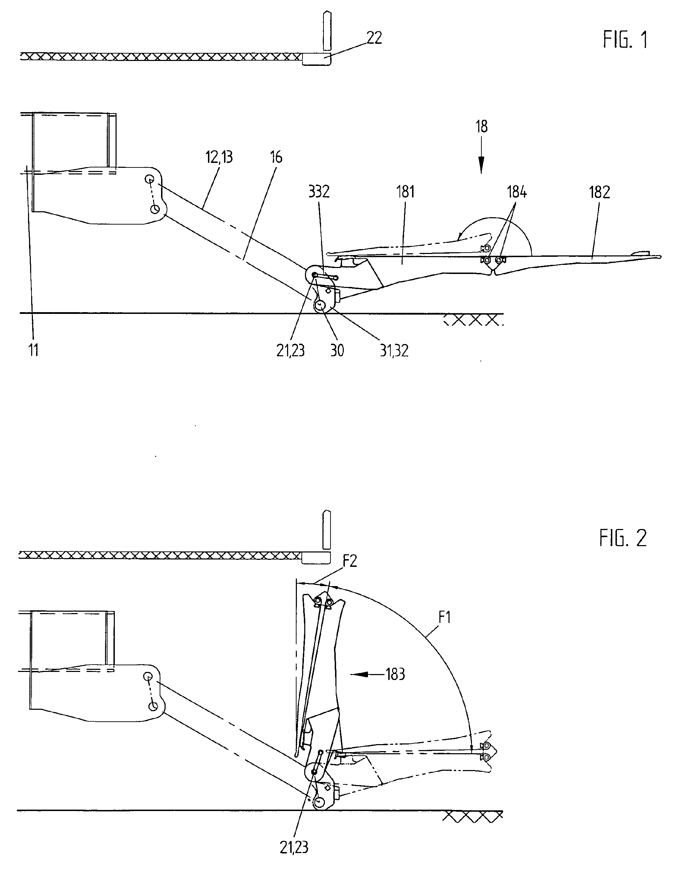

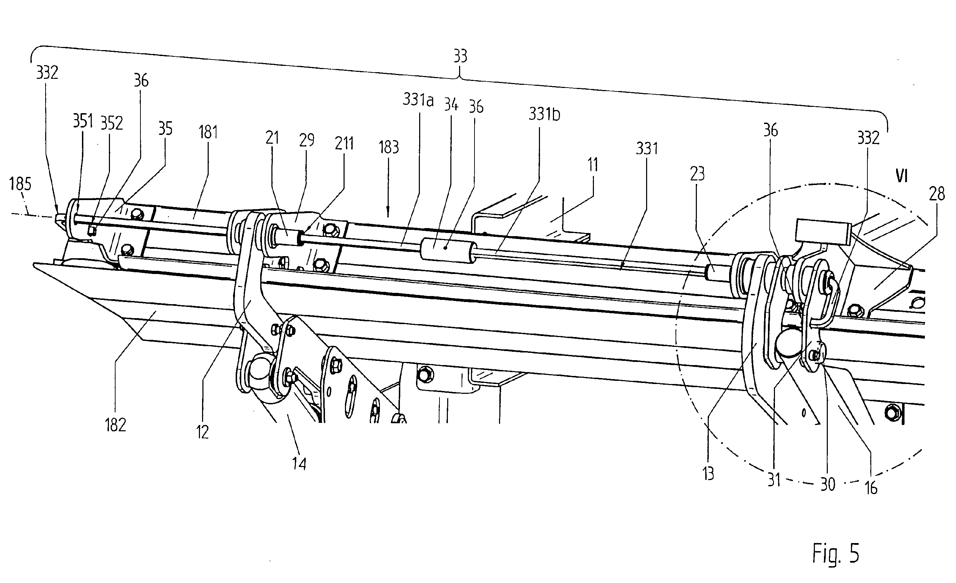

Die in **Fig. 1** gezeigte Hubladebühne hat ein parallelogrammförmiges Hubwerk mit zwei parallelen Tragarmen **12, 13,** an denen eine Plattform **18** angelenkt ist, mit einem am Tragarm 12 angreifenden Hubzylinder **14** (Fig. 5) zum Heben und Senken der Plattform 18 und mit einem Parallelzylinder **16** zum Abkippen der Plattform 18 auf den Boden. Der Parallelzylinder 16 ist mittels zweier parallelogrammgeführter Koppellaschen **31, 32** an der Plattform 18 angelenkt. Die Plattform 18 ist an den beiden Tragarmen 12, 13 mittels Hohlbolzen **21, 23** um eine Drehachse **185** (Fig. 5) zwischen einer horizontalen Arbeitsposition und einer Fahrposition verschwenkbar gelagert und hat ein Festteil **181**, an dem die Plattformspitze als Faltteil **182** um Scharnierdrehpunkte **184** schwenkbar gelagert ist. Um die Schwenkbewegung der Plattform 18 von der einen in die andere Position zu unterstützen, ist eine Federeinrichtung **33** (Fig. 5) vorgesehen. Der Heckschweller des Fahrzeugs, an dem die Plattform 18 in ihrer obersten Arbeitsposition anliegt, ist mit **22** bezeichnet.

Fig. 1 zeigt die ausgefaltete Plattform 18 in ihrer waagerechten Arbeitsstellung am Boden liegend. Durch Umklappen des Faltteils 182 um 180° in die gestrichelt gezeichnete Stellung lässt sich die Plattform 18 zu einem Plattformpaket **183** zusammenfalten. In dem in Fig. 1 gezeigten Faltzustand hat der Parallelzylinder 16 die Position derart, dass die Plattform 18 eine etwa waagerechte Position einnimmt. In dieser Position hält der Parallelzylinder 16 die beiden Koppellaschen 31, 32. Diese Position bleibt auch beim Heben und Senken, bezogen auf die Senkrechte, unverändert.

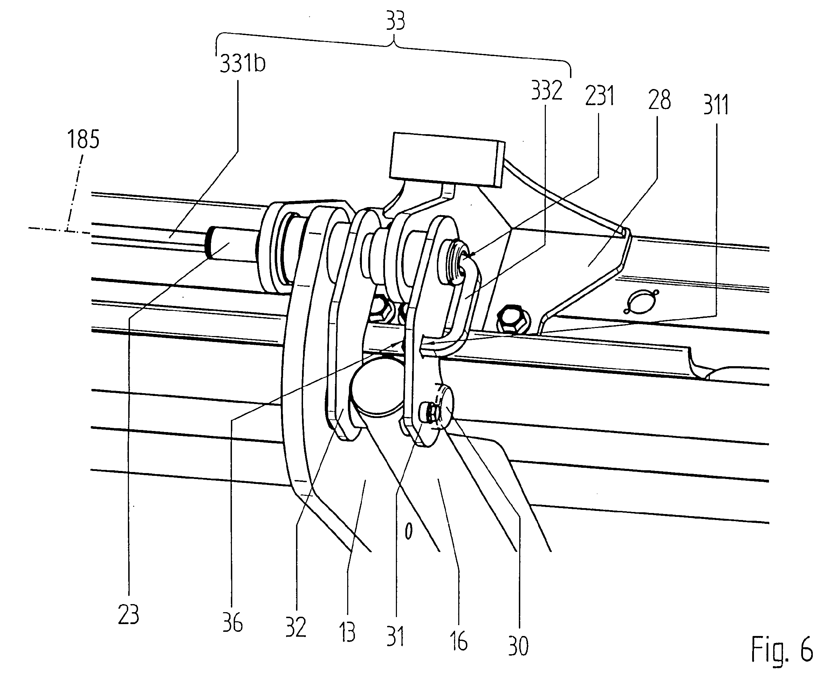

Die in **Fig. 5** und **Fig. 6** gezeigte Federeinrichtung 33 ist durch einen Torsionsstab **331** gebildet, dessen Torsionsachse mit der Drehachse 185 der Plattform 18 zusammenfällt. Dieser Torsionsstab 331 besteht aus zwei gleichen Torsionsstäben **331a, 331b**, welche mit einer Kupplung **34** drehsteif verbunden sind. Die Torsionsstäbe 331a, 331b sind L-förmig ausgebildet, wobei der Fuß des "L" einen Hebelarm 332 bildet.

Der rechte Torsionsstab 331 b erstreckt sich durch die Bolzenbohrung **231** des Hohlbolzens 23, und sein Hebelarm 332 steckt mit seinem um 90° abgewinkelten Ende in einem Ankerloch **311** der äußeren Koppellasche 31 und ist mit dem Splint **36** gegen das Herauswandern gesichert. Das andere Ende des rechten Torsionsstabes 331b steckt in der Kupplung 34. Die äußere und die innere Koppellasche 31, 32 sind über einen Lagerbolzen **30** mit dem Parallelzylinder 16 verbunden.

Der linke Torsionsstab 331 a erstreckt sich durch die Lagerbohrung **211** des Hohlbolzens 21 und durch die Lagerbohrung **351** eines Plattformmitnehmers **35**, der am Festteil 181 so befestigt ist, dass die Lagerbohrung 351 in der Flucht mit den Lagerbohrungen 211, 231 der Hohlbolzen 21, 23 liegt. Der Plattformmitnehmer 35 hat ein Ankerloch **352,** in welches der Hebelarm 332 mit seinem um 90° abgewinkelten Ende eingreift. Das andere Ende des linken Torsionsstabes 331 a steckt ebenfalls in der Kupplung 34, welche die beiden Torsionsstäbe 331a, 331b miteinander drehfest verbindet. Dazu hat die Kupplung 34 eine durchgehende Bohrung mit quadratischem Querschnitt zur beiderseitigen Aufnahme der beiden Torsionsstäbe 331a, 331b. Damit die Kupplung 34 sich nicht verschieben kann, sind einerseits ein Splint 36 in der Kupplung 34 und andererseits die Splinte 36 in den beiden Hebelarmen 332 vorgesehen. In Fig. 5 sind auch der Fahrzeugrahmen **11**, an dem die Hubladebühne befestigt ist, sowie die Anschlussköpfe **28, 29** der Plattform 18 gezeigt, welche die Hohlbolzen 21, 23 aufweisen.

Im gezeigten Ausführungsbeispiel sitzt der Plattformmitnehmer 35 zur Erzielung der maximalen Torsionsstablänge so weit außen wie möglich am linken Plattformrand. Da die beiden Torsionsstäbe 331a, 331b gleich lang sind, befindet sich die Kupplung 34 daher nicht mittig zwischen den beiden Tragarmen 12, 13.

**Fig. 2** zeigt das von der waagerechten Arbeitsposition in Richtung Fahrzeug hochgeschwenkte Plattformpaket 183. Der Schwenkwinkel **F1** zeigt den Winkelbereich an, in dem die Federeinrichtung 33 wirkt. In der waagerechten Stellung des Plattformpakets 183 ist der Torsionsstab 331 maximal gespannt, das erzeugte Drehmoment gleicht das Plattformpaketgewicht bis auf die gewünschte Handkraft aus. Mit zunehmendem Schwenkwinkel, von der waagerechten Arbeitsposition ausgehend, reduziert sich das Drehmoment durch Entspannung des Torsionsstabes 331. Es läuft in etwa proportional zur Reduzierung des Schwenkpunktabstands des Plattformpakets 183 zur Drehachse 185. Beim Weiterschwenken des Plattformpakets 183 werden der Torsionsstäbe 331 völlig entlastet und das Lagerspiel in den beiden Ankerlöchern 311, 352, der Kupplung 34, den Bolzenbohrungen 211, 231 und der Lagerbohrung 351 auf die andere Seite gebracht. Der Drehwinkel **F2** entspricht dem gesamthaften Torsions- und Lagerspiel.

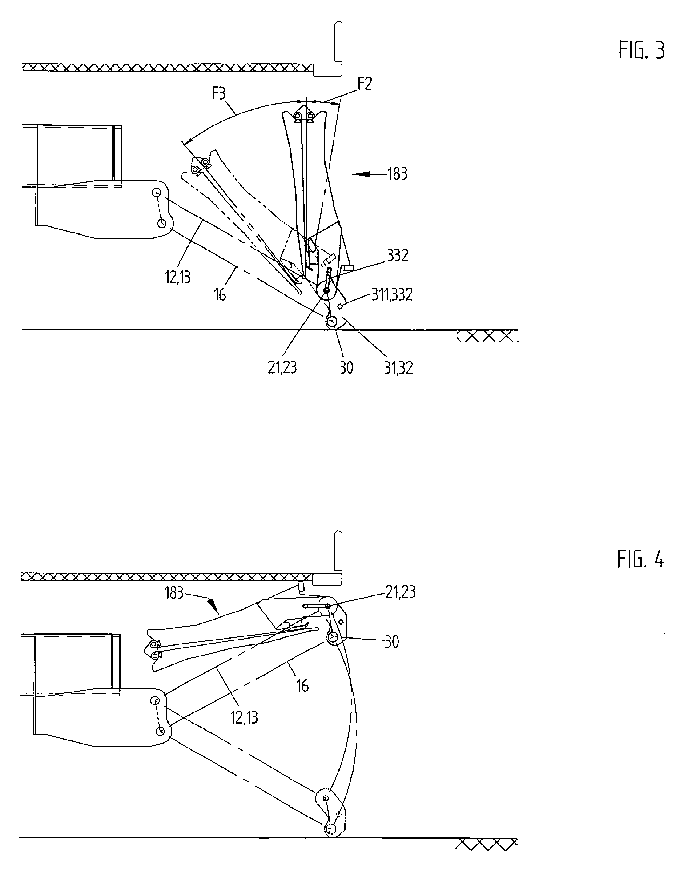

Zu Beginn des Drehwinkels **F3** wird der Torsionsstab 331 in die andere Richtung vorgespannt (**Fig. 3**). Am Ende des Drehwinkels F3 liegt das Plattformpaket 183 auf einem nicht näher dargestellten Gummipuffer auf den Tragarmen 12, 13 auf und kann durch Heben in die in **Fig. 4** gezeigte Fahrposition hydraulisch verschwenkt werden. Das Ausfalten des Plattformpakets 183 erfolgt genau umgekehrt dem beschriebenen Einfalten.

Die erfindungsgemäße Ausführung erlaubt eine großzügige Tolerierung der Bohrungen der gesamten Federeinrichtung 33. Die Ankerlöcher 311, 352 sowie die Lagerbohrung 351 können zum Beispiel in normaler Laserschneidqualität eingesetzt werden. Für die Bolzenbohrungen 211, 231 genügt ein durch Bohren hergestelltes Loch. Die Toleranzen spielen deshalb eine untergeordnete Rolle, weil sich der Drehwinkel F2 genau in dem Bereich bewegt, wo der Schwerpunkt des Plattformpaketes 183 den geringsten Abstand zur Drehachse 185.

## Patentansprüche

1. Hubladebühne für ein Fahrzeug, mit einem parallelogrammförmigen Hubwerk, das zwei parallele Tragarme (12, 13), an welchen eine Plattform (18) zwischen einer horizontalen Arbeitsposition und einer Fahrposition verschwenkbar gelagert ist, und eine Federeinrichtung (33), welche die Schwenkbewegung der Plattform (18) von der einen in die andere Position unterstützt, aufweist, **dadurch gekennzeichnet,**
**dass** die Federeinrichtung (33) durch einen Torsionsstab (331) gebildet ist, dessen Torsionsachse mit der Drehachse (185) der Plattform (18) zusammenfällt.

2. Hubladebühne nach Anspruch 1, **dadurch gekennzeichnet, dass** der Torsionsstab (331) spannungsfrei ist, wenn sich der Schwerpunkt der Plattform (18) etwa senkrecht oberhalb ihrer Drehachse (185) befindet.

3. Hubladebühne nach Anspruch 1 oder 2, **dadurch gekennzeichnet, dass** der Torsionsstab (331) mit seinem einen Ende an der Plattform (18) und mit seinem anderen Ende an einer parallelogrammgeführten Koppellasche (31) des parallelogrammförmigen Hubwerks angreift.

4. Hubladebühne nach Anspruch 3, **dadurch gekennzeichnet, dass** der Torsionsstab (331) an einem oder an beiden Enden zu einem an der Plattform (18) bzw. an der Koppellasche (31) angreifenden Hebelarm (332) umgebogen ist.

5. Hubladebühne nach einem der vorhergehenden Ansprüche, **dadurch gekennzeichnet, dass** der Torsionsstab (331) in beide Schwenkrichtungen der Plattform (18) wirkt.

6. Hubladebühne nach einem der vorhergehenden Ansprüche, **dadurch gekennzeichnet, dass** der Torsionsstab (331) aus zwei insbesondere gleichlangen Torsionsstäben (331a, 331b) zusammengesetzt ist, die jeweils durch eine Kupplung (36) miteinander drehfest verbunden sind.

7. Hubladebühne nach einem der vorangegangenen Ansprüche, **dadurch, gekennzeichnet, dass** der Torsionsstab (331) einen polygonen, insbesondere viereckigen Querschnitt hat.

8. Hubladebühne nach einem der vorangegangenen Ansprüche, **dadurch gekennzeichnet, dass** die Plattform (18) an den Tragarmen (12) jeweils mittels eines Hohlbolzens (21) gelagert ist, durch den sich der Torsionsstab (331) hindurch erstreckt.
